# EUROPEAN PATENT SPECIFICATION

(11) **EP 3 091 563 B1**
(45) Date of publication and mention of the grant of the patent: **15.05.2019**
(21) Application number: 14876323.8
(22) Date of filing: 15.12.2014
(51) Int. Cl.: H01J 49/16, H01T 19/04, G01N 27/68

(54) **CORONA DISCHARGE COMPONENT AND METHOD FOR PERFORMING CORONA DISCHARGE**
KORONAENTLADUNGSANORDNUNG UND METHODE ZUR KORONAENTLADUNG
SYSTÈME DE DÉCHARGE À COURONNE ET MÉTHODE DE DÉCHARGE À COURONNE

(30) Priority: 30.12.2013 CN 201310741426
(43) Date of publication of application: 09.11.2016
(73) Proprietor: Nuctech Company Limited, TongFang Building, Shuangqinglu, Haidian District Beijing 100084 (CN)
(72) Inventor: ZHANG, Qingjun, Beijing 100084 (CN); LI, Yuanjing, Beijing 100084 (CN); CHEN, Zhiqiang, Beijing 100084 (CN); WANG, Yanchun, Beijing 100084 (CN); ZHAO, Ziran, Beijing 100084 (CN); LIU, Yinong, Beijing 100084 (CN); LIU, Yaohong, Beijing 100084 (CN); ZOU, Xiang, Beijing 100084 (CN); MA, Qiufeng, Beijing 100084 (CN); WANG, Junxiao, Beijing 100084 (CN); LI, Xianghua, Beijing 100084 (CN); CHANG, Jianping, Beijing 100084 (CN)
(74) Representative: Dehns
(86) International application number: PCT/CN2014/093823
(87) International publication number: WO 2015/101165

(56) References cited:
- CA-A1- 2 857 186
- CN-A- 101 626 145
- CN-A- 102 668 285
- CN-A- 103 137 417
- CN-U- 203 774 249
- GB-A- 1 330 424
- JP-A- 2009 259 465
- US-A- 5 684 300
- US-A1- 2007 007 448

## Description

### FIELD

The present invention relates to the technical field of security detection, and specifically relates to an easy-to-manufacturing and multi-pin long-life corona discharge component, and an ion mobility spectrometer, a computer program and a storage medium which are used for detecting drugs and explosive substances by using the component as an ionization source.

### BACKGROUND

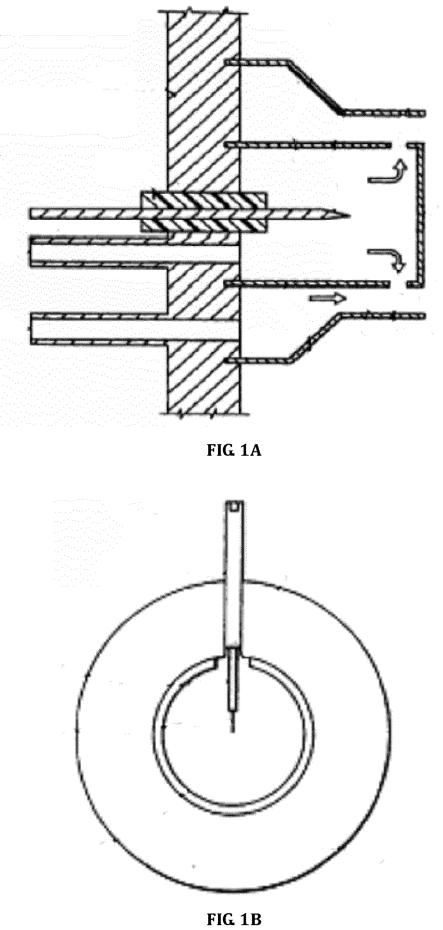

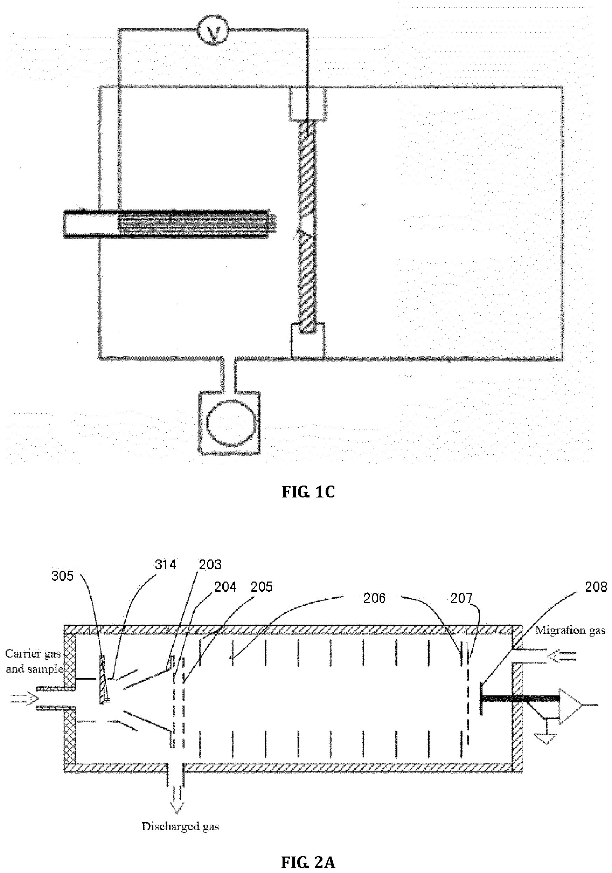

The ion mobility spectrometer realizes ion differentiation according to the fact that different ions have different drift speeds in a uniform weak electric field. It has the advantages of fast differentiating speed, high sensitivity, no need of a vacuum environment, and convenience for miniaturization, therefore, the ion mobility spectrometer is widely used in the field of detection of drugs and explosive substances. A typical ion mobility spectrometer generally is comprised of a sample injection part, an ionization part, an ion gate, a migration zone, a collection zone, a reading circuit, a data acquisition and processing, and control part and the like; wherein the main function of the ionization part is to convert sample molecules into ions for migration and separation, therefore, the effect of ionization has a very direct influence on the performance of the spectrometer. In the prior art, the most common and most widely used ionizing component adopts a ⁶³Ni radiation source, it has the advantages of small size, high stability and no need of an additional circuit, but it also has the problems of narrow linear range, low concentration of converted ions and radiation pollution. In particular, the problem of radiation pollution brings a lot of inconvenience for the operation of equipment, transportation and management. In order to overcome the above problems, a corona discharge technology is adopted to replace a radioactive source technology. Corona discharge refers to a phenomenon of gas molecule ionization caused by a local strong electric field in a non-uniform electric field in space. The ions directly generated by corona discharge are generally known as reactant ions, and when sample molecules having higher proton or electron affinity pass through the ionization zone, they are ionized by capturing charges of the reactant ions. Generally, a structure of corona discharge is relatively simple, therefore, the cost is low; and meanwhile, compared with that of a radioactive source, the concentration of the charges generated by corona discharge is much higher, so that the sensitivity of the ion mobility spectrometer can be improved beneficially, and a relatively large dynamic range can be obtained. The foreign patents US5485016 and CA2124344 and the Chinese patents CN1950698A and CN103137417A have disclosed application examples of corona discharge which is used as an ionization source of the ion mobility spectrometer. A common corona discharge structure has a pinpoint-plate or pinpoint-cylinder discharge mode, as shown in FIGs. 1A and 1B. The corona pins for realizing discharge generally have fixed tail ends arranged on a supporting substrate, and the tail ends are in conduction with a high-voltage power supply; and the other end of each corona pin is a free end (i.e., a pinpoint), and generally is a tip with a very small (less than 0.1mm) radius of curvature. A non-uniform electrostatic field is formed in the space between a plate or cylinder electrode and the pinpoint to ensure that the intensity of the electric field close to the pinpoint is very high, and the intensity of the electric field far from the pinpoint is decreased. The ionization of gas only happens in a near surface space of a free tip of an electrode, and thus the ionization zone is very small, so that the generated ion concentration is relatively small; and if the ionization zone needs to be enlarged, a relatively high voltage is needed, and the requirement on a high-voltage power supply is relatively high. Moreover, in the case of the discharge of only one tip, the corona discharge will oxidize a corona electrode, and after a long time of operation, the chemical reaction caused by water vapor and the like in a gas will seriously corrode the tip, then the radius of curvature of the tip is increased, the voltage threshold of the corona discharge is increased, the stability of the corona discharge of the tip is reduced, and finally the life of the tip is ended; moreover, in order to achieve a relatively small radius of curvature, the diameter of a pin is generally very small, and the strength of the pin is relatively low, so that it is very difficult to keep a relatively high position precision during manufacturing and assembly of a product. In order to improve the situation, a structure of multi-pin corona discharge is developed.

The American patent US7326926B2 describes a typical multi-pin-cluster corona discharge ion source, as shown in FIG. 1C. A cluster of parallel corona pins is adopted to replace a single corona pin of a classical corona discharge ion source; and the design of simultaneous high voltage loading discharge of multiple tips of multiple pin clusters, to a certain degree, solves the problem of the reduction of the service life of an ion source due to invalidation of single corona pin discharge. However, the multi-pin simultaneous high voltage loading discharge also has significant defects: first of all, when a high voltage is loaded on multiple pins simultaneously, the electric field formed by each pin influences one another, then the intensity of the electric field at the pinpoint is reduced, the corona voltage needs to be increased, and the requirement for a high-voltage power supply is higher; moreover, the inconsistency of the processing of the pins results in that the shapes and surfaces of respective tips of the pins are not same, not all the tips can surely meet the conditions of corona discharge, but the pins with relatively small radiuses of curvature generate discharge at first, their radiuses of curvature are gradually enlarged through gradual wastage and then cannot meet the conditions of corona discharge, and then the other pins that meet the conditions start to discharge, and in this case, the number of the pins that generate corona discharge at a certain moment cannot be ensured and it is very stochastic, therefore, the number of ions generated by ionization changes greatly, which results in instable corona discharge, and is not favorable for stable work of the ion mobility spectrometer. CA 2857186 discloses a corona discharge device according to the preamble of claim 1 and an ion mobility spectrometer having a corona discharge device.

### SUMMARY

The inventor recognized that, if multi-pin independent control alternate corona discharge can be realized, that is, at a certain moment, only one pin is loaded with a high voltage to generate corona discharge, and the other pins are not loaded with the high voltage, a strong electric field can be easily formed at the pinpoint loaded with the high voltage, and the problem of instability of a corona ion source due to simultaneous loading of a high voltage on multiple pins and the problem of short service life of a single-pin corona ion source can be solved at the same time.

The present invention aims to provide a design solution of a multi-pin independently controlled alternate corona discharge component which is stable and is convenient to manufacture, and the design is simple in structure, and can effectively prolong the whole service life of an ionization component, increase the stability of corona discharge, and improve the performance of a mobility spectrometer.

In order to achieve the above purpose, according to an aspect of the present invention, there is provided a corona discharge component as claimed in claim 1. Therefore, multi-pin independent control alternate corona discharge can be realized, that is, at a certain moment, only one pin is loaded with a high voltage to generate corona discharge, and the other pins are not loaded with the high voltage, a strong electric field can be easily formed at the pinpoint loaded with the high voltage, and the problem of instability of a corona ion source due to simultaneous loading of a high voltage on multiple pins and the problem of short service life of a single-pin corona ion source can be solved at the same time.

The corona discharge component includes a PCB (printed circuit board) for fixing the corona pins.

Preferably, the PCB is a high-temperature-resistant PCB with a wiring layer clamped between two insulating layers. A certain number of uniformly-distributed vias are formed in the front end of the PCB, wherein the assembly position of the central one of the vias is positioned at the axis line of the metal corona cylinder, and a corona pin is brazed in each via.

Preferably, each via is connected with a separate lead.

Preferably, the separate lead is a PCB copper-clad lead, and an independent high-voltage lead is welded at the tail end of the separate lead, respectively, so as to connect with an external high-voltage power source.

Preferably, the on-off switching of each of the high-voltage leads can be controlled separately. When a corona ion source is operating, each of the corona pins on the PCB is controlled through an external switch to be alternately loaded with a high voltage so as to generate corona discharge at the tip of the corona pin. After the tips of all the corona pins on one PCB fail, the component can be removed and replaced with a new PCB or replaced with and braze weld new corona pins.

Preferably, the corona discharge component also includes an ion reaction and storage ring which is shaped as a trumpet-shaped inner passage, wherein a small-opening end of the ion reaction and storage ring is embedded into a trumpet-shaped opening of the metal corona cylinder but is not in electrical contact with the metal corona cylinder, and a big-opening end of the ion reaction and storage ring contacts a first grid mesh of an ion gate to ensure that an isopotential zone is formed between the inside of the big-opening end and the first grid mesh of the ion gate for ion storage. Therefore, the ions generated by corona discharge can enter an ion reaction storage zone under the traction of an electric field. The ion reaction and storage ring is mainly used for: when the ion gate is closed, enabling primary reaction ions to fully react and compound with a sample gas so as to generate and store to-be-detected characteristic ion clusters; and when the ion gate is opened, enabling the compounded ion clusters to converge and enter an ion migration cavity through the ion gate. By means of this design, the impulse interference of corona discharge and the fluctuation of ion number caused by corona pulse can be effectively shielded, the passing rate of the ions at the ion gate is increased, and an effect of enabling ion migration spectral lines to be stable is achieved.

According to an embodiment of the present invention, an ion mobility spectrometer is disclosed, and the ion mobility spectrometer includes: the above-mentioned corona discharge component; an ion gate, which is composed of two opposite grid meshes; a migration zone, which includes drift electrodes that are coaxial and equidistant ring electrodes; and a Faraday plate, behind which a charge sensitive amplifier is connected for reading ion signals.

According to an embodiment of the present invention, a computer program for controlling the corona discharge component to perform corona discharge is also disclosed, and the following step is carried out for controlling the corona discharge component to perform corona discharge:
wherein at any moment, only one corona pin generates corona discharge, and the other pins are suspended; and the multiple corona pins are alternately loaded with a high voltage for work.

According to an embodiment of the present invention, a computer storage medium is also disclosed, and the computer storage medium is used for storing the above-mentioned computer program.

The corona discharge component, the ion mobility spectrometer, the computer program and the storage medium according to the present invention are provided such that at any moment, only one corona pin generates corona discharge, the other pins are suspended, and the multiple corona pins are loaded with a high voltage alternately for work, therefore, this structure can prolong the service life of the whole corona discharge component relative to a single-pin structure, reduce the discharge voltage of an ion source and improve the discharge stability of the ion source relative to a multi-pin-cluster structure, and can be manufactured in batches more easily as multiple corona pins are fixed on a PCB and the precision and stability of electrode positions can be achieved during installation relative to suspension installation of pin-shaped electrodes.

### BRIEF DESCRIPTION OF THE DRAWINGS

FIGs. 1A, 1B and 1C are schematic diagrams of traditional corona discharge structures;
FIG. 2A is a schematic structural diagram of a ion mobility spectrometer using a PCB multi-pin alternate corona discharge ion source component according to an embodiment of the present invention;
FIG. 2B is a schematic diagram of the potential of each of electrodes of the ion mobility spectrometer in FIG. 2A in a normal mode;
FIG. 3A is a schematic diagram of a high-voltage connection of a multi-pin alternate discharge ion source according to an embodiment of the present invention;
FIG. 3B is side and front sectional views of the PCB of the corona discharge component according to an embodiment of the present invention; and
FIG. 4 is a diagram of the variations of the relative ion passing rate vs. the eccentric distance of an electrode wire for different ion gate leaping voltages.

### DESCRIPTION OF THE EMBODIMENTS

Hereinafter, specific implementations of the present invention are further described in details in combination with the drawings and the embodiments. The following embodiments are used for illustrating the present invention but not limiting the scope of the present invention.

In the corona discharge ion mobility spectrometer shown in FIG. 2A, a non-uniform electric field for realizing corona discharge is mainly composed of corona pins 305, a metal corona cylinder 314 and an ion reaction and storage ring 203. The ion mobility spectrometer includes: the corona discharge component; an ion gate, which consists of two opposite grid meshes 204 and 205; a migration zone, which includes drift electrodes 206 that are coaxial and equidistant ring electrodes; and a Faraday plate 208, behind which a charge sensitive amplifier is connected for reading ion signals.

According to embodiments of the present invention, the corona discharge component includes: an ionization discharge cavity, where the ionization discharge cavity includes a metal corona cylinder 314, and the metal corona cylinder 314 is provided with an inlet of a to-be-analyzed gas (as shown on the left side of FIG. 2A) and a trumpet-shaped front port which facilitates formation of a convergence electric field; and multiple corona pins 305 which are independently control the on-off switch of high-voltage are insulatively mounted in the center of the metal coronal cylinder 314.

In the case, in order to realize independent control of the on-off switching of high-voltage of the corona pins 305, each one of the multiple corona pins 305 is separately connected to a high-voltage lead capable of controlling the on-off switching separately. Therefore, the independent control of alternate corona discharge of the multiple corona pins 305 can be realized, that is, at a certain moment, only one corona pin 305 is loaded with a high voltage to generate corona discharge, and the other corona pins 305 are not loaded with the high voltage, a strong electric field can be easily formed at the pinpoint of each corona pin 305 loaded with the high voltage, and the problem of instability of a corona ion source due to simultaneous loading of a high voltage on multiple pins and the problem of short service life of a single-pin corona ion source can be solved at the same time.

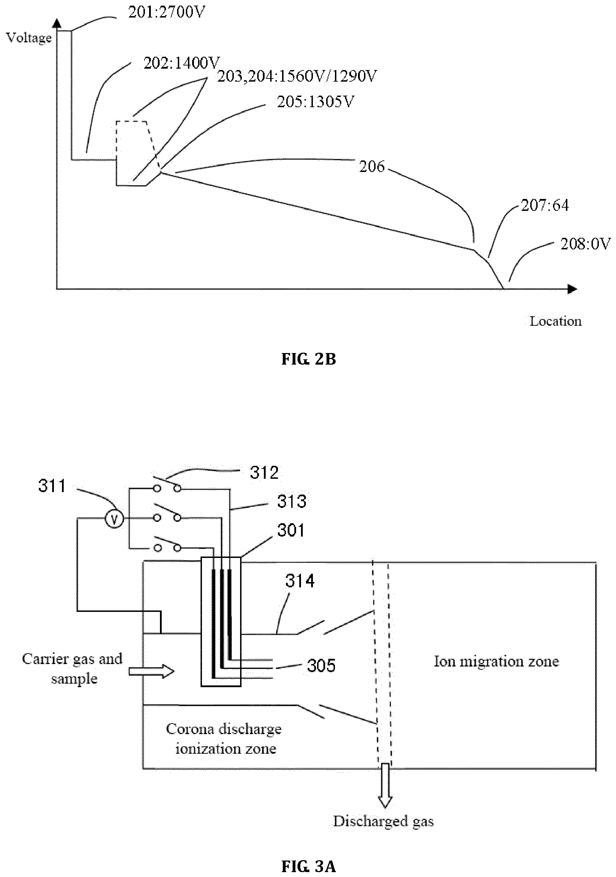

FIG. 2B is a schematic diagram of the potential of each of the electrodes of the ion mobility spectrometer in FIG. 2A in a normal mode. When the ion mobility spectrometer is operating, the voltage of the corona pins 305 is about 700-3000V higher than that of the metal corona cylinder 314 (depending on the tip radii of the corona pins 305 and the lengths of the corona pins 305, there may be different corona onset voltages for different geometric sizes) to generate electronic coronas so as to generate ions. The voltages of the ion reaction and storage ring 203 and a first ion gate 204 transit periodically, as shown in FIG. 2B, and when they are at a low voltage, it may be called a "storage state" (i.e., the solid line part), and called a "traction state" (i.e., the dotted line part) when they are at a corresponding high voltage. When the voltages of the ion reaction and storage ring 203 and the first ion gate 204 are in the "storage state", the voltages are 60-150V lower than that of the metal corona cylinder 314 and about 5-60V lower than that of a second ion gate 205. After the ions enter the first ion gate 204, the electric field force applied on the ions is relatively weak, and the ions mainly do thermal motion in a cavity of the first ion gate 204; and after a certain period of time, the ions in the first ion gate 204 are accumulated to a certain number, the voltages of the ion reaction and storage ring 203 and the first ion gate 204 transits to the "traction state", and at this time, the ions generated by the coronas at the corona pins 305 stop entering the first ion gate 204 (to prevent the fluctuation of the number of the ions in the first ion gate 204 due to corona pulses of this time), but the ions in the first ion gate 204 quickly pass through the second ion gate 205 to enter the ion migration zone 206 under the action of the electric field force between the first ion gate 204 and the second ion gate 205. In the ion migration zone 206 filled with a migration gas through a migration gas inlet (as shown on the right side of FIG. 2A), the ions reach a symmetric movement state under the combined action of an electric field traction force and a migration gas flow which is in reversed movement, the ions with different mobility ratios, after migrating for a relatively long distance, are separated due to different speeds, and finally are collected by a Faraday plate 208 after passing through a suppressor grid 207 and are recorded by a back-end circuit. The gas in the ion mobility spectrometer is discharged from a gas outlet as shown on the lower side of FIG. 2A.

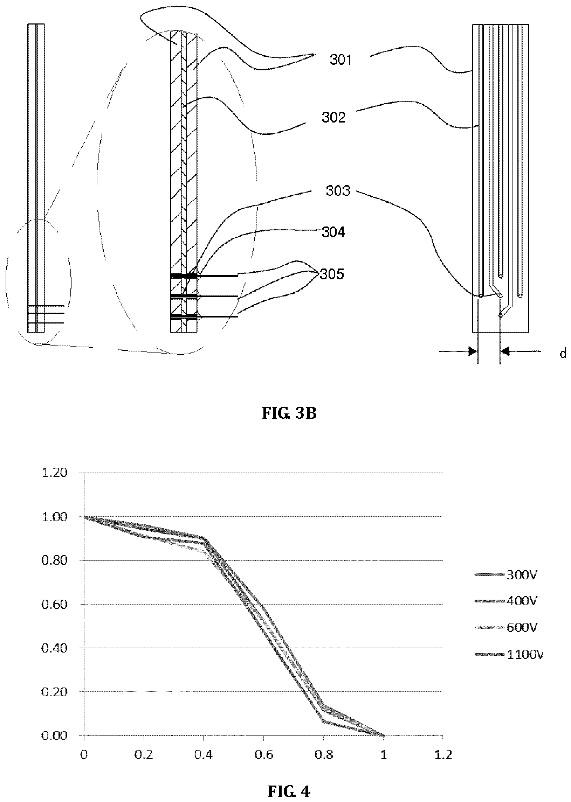

FIG. 3A is a schematic diagram of the high-voltage connection of the multi-pin alternate discharge ion source according to the embodiment of the present invention; and FIG. 3B is side and front sectional views of the PCB of the corona discharge component according to the embodiment of the present invention. Preferably, the corona discharge component includes a PCB 301 for fixing the corona pins 305, and at this time, the PCB 301 plays a role of a high-voltage connecting base.

Preferably, the PCB 301 is a high-temperature-resistant PCB with a wiring layer clamped between two insulating layers; and a certain number of uniformly-distributed vias 303 are formed in the front end (i.e., a position close to the axis line of the metal corona cylinder 314) of the PCB 301, wherein the assembly position of the central one of the vias is positioned at the axis line of the metal corona cylinder 314, and a corona pin 305 is brazed in each via.

Preferably, each via 303 is connected with a separate lead 302. The separate lead 302 is a PCB copper-clad lead, and an independent high-voltage lead 313 is welded at the tail end of the separate lead, respectively, so as to connect with an external high-voltage power source. The on and off switching of each high-voltage lead 313 can be controlled separately. When a corona ion source is in work, each corona pin 305 on the PCB is controlled through an external switch to be loaded with a high voltage alternately so as to generate corona discharge at the tip of the corona pin. When the tips of all the corona pins 305 on one PCB fail, the component can be removed for replacement of a new PCB or brazing of new corona pins 305.

The corona discharge component may also include an ion reaction and storage ring 203 which is shaped as a trumpet-shaped inner passage, wherein a small-opening end of the ion reaction and storage ring 203 is embedded into a trumpet-shaped opening of the metal corona cylinder 314 but is not electrical contact with the metal corona cylinder 314, and a big-opening end of the ion reaction and storage ring 203 contacts a first grid mesh 204 of an ion gate to ensure that an isopotential zone is formed between the inside of the big-opening end and the first grid mesh 204 of the ion gate for ion storage. Therefore, the ions generated by corona discharge can enter an ion reaction storage zone under the traction of an electric field. The ion reaction and storage ring is mainly used for: when the ion gate is closed, enabling primary reaction ions to fully react and compound with a sample gas so as to generate and store to-be-detected characteristic ion clusters; and when the ion gate is opened, enabling the compounded ion clusters to converge and enter an ion migration cavity through the ion gate. By means of this design, the impulse interference of corona discharge and the fluctuation of ion number caused by corona pulse can be effectively shielded, the passing rate of the ions at the ion gate is increased, and an effect of enabling ion migration spectral lines to be stable is achieved.

The PCB can be made by clamping a wiring layer between two high-temperature-resistant insulating layers, and the PCB 301 has good insulating property and high temperature resistance, can withstand a high voltage of 4000V and a high temperature of at least 180 °C, is stable in chemical property, and does not contain a volatile substance. The PCB 301 can be made from ceramic, polyamide and the like. A certain number (preferably, 4-7) of uniformly-distributed vias 303 which are spaced apart from each other by a certain separation distance d are formed in one end (i.e., positions near the axis of the metal corona cylinder 314) of the PCB inserted in the metal corona cylinder 314, each via 303 is connected with one printed conductor 302, the printed conductors 302 are not connected with one another, the other end of the PCB 301 extends out of the metal corona cylinder 314, each printed conductor 302 on the PCB 301 has a separate high-voltage lead 313 connected with a high-voltage power supply 311, and each high-voltage lead 313 has an independent switch 312. A corona pin 305 is fixed in each via 303 by adopting high-temperature welding flux 304 brazing. The corona pins 305 may be needle-shaped or threadlike, have extremely fine tips (the radius of curvature is less than 0.05mm), and can be made of a chemically inert refractory metal, for example, platinum, iridium or the like; and the height of each corona pin 305 extending beyond the PCB is consistent. The setting of the separation distance d of the corona pins 305 should be determined by comprehensively considering the minimum PCB hole pitch that can be reached by a processing technology and the influence of electrode wire eccentric distance on the passing rate of the ions at the ion gates. During corona discharge, a certain corona pin 305 is loaded with a voltage, the other corona pins are suspended, a non-uniform corona electric field is formed between the corona pin 305 loaded with the voltage and the metal corona cylinder 314 and between the corona pin 305 loaded with the voltage and the ion reaction and storage ring 203, the field intensity of the tip of the corona pin with a small radius of curvature is relatively high, and corona discharge happens in a surface space of this corona pin. When the pinpoint of the corona pin 305 which generates discharge is invalidated after being bombarded and corroded by charged particles, another corona pin 305 can be loaded with a voltage for replacement to make the remaining corona pins 305 be suspended. Therefore, the corona pins 305 generate corona discharge alternately, thereby prolonging the whole service life of the corona discharge component. The corona pins 305 can be arranged on the PCB by brazing, the PCB is high in machining precision and relatively high in strength, and the corona pins 305 are fixed by brazing and are very convenient to install, replace and repair.

### Example:

In this example, a specific design of a corona discharge component which adopts PCB brazed corona pins 305 to replace axial suspended slender corona pins in a traditional corona discharge structure is described. As shown in FIG. 3B, the PCB is made by clamping one wiring layer 302 between two layers of aluminum oxide ceramic insulating layers 301, the thickness of the insulating layers is 1mm, and the thickness of the wiring layer in the middle is 2OZ (about 0.07mm). One end of the PCB is provided with 5 vias 303 with the diameter of 0.2mm, wherein one via 303 is positioned at the axis line of the metal corona cylinder 314 during installation, the other four vias are centro-symmetric around the via in the center and are uniformly distributed around the via in the center, and the distance d from the four vias to the via in the center is 0.4mm. One corona pin 305 is vertically brazed in each via 303 by adopting a high-temperature welding flux, the corona pins 305 are made of platinum wires with the diameter of 20-50 µ m, and the height of each corona pin 305 above the PCB is 2mm. For this example, the width/separation distance of printed circuits of the PCB is 8/8mil (about 0.2mm), and the separation distance of the vias 303 is 0.4mm (i.e., the eccentric distance of all the corona pins 305 is 0.4mm). According to an analog computation result, when the eccentric distance of the corona pin 305 loaded with a high voltage is within 0.4mm, compared with the corona pin 305 in the center loaded with a high voltage, the relative ion passing rate can reach 0.9 or above, as shown in FIG. 4.

According to the structure characteristics of the ionization component of the present invention, at any moment, only one corona pin 305 generates corona discharge, the other corona pins 305 are suspended, and the multiple corona pins 305 are loaded with a high voltage alternately for work, therefore, this structure can prolong the service life of the whole corona discharge component relative to a single-pin structure, reduce the discharge voltage of an ion source and improve the discharge stability of the ion source relative to a multi-pin-cluster structure, and can be manufactured in batches more easily as multiple corona pins are fixed on a PCB and the precision and stability of electrode positions can be achieved during installation relative to suspension installation of pin-shaped electrodes.

The present invention also provides a computer program for controlling the corona discharge component to perform corona discharge, and the computer program controls the corona discharge component to perform corona discharge by carrying out the following step: wherein at any moment, only one corona pin generates corona discharge, and the other pins are suspended; and the multiple corona pins are loaded with a high voltage alternately for work.

The present invention also provides a computer storage medium which is used for storing the above-mentioned computer program.

To sum up, according to the corona discharge component, the ion mobility spectrometer, the computer program and the storage medium of the present invention, at any moment, only one corona pin generates corona discharge, the other pins are suspended, and the multiple corona pins are loaded with a high voltage alternately for work, therefore, this structure can prolong the service life of the whole corona discharge component relative to a single-pin structure, reduce the discharge voltage of an ion source and improve the discharge stability of the ion source relative to a multi-pin-cluster structure, and can be manufactured in batches more easily as multiple corona pins are fixed on a PCB and the precision and stability of electrode positions can be achieved during installation relative to suspension installation of pin-shaped electrodes.

The present invention may be realized in any appropriate form, including hardware, software, firmware or any combinations of them. Optionally, the present invention may be at least partly realized as computer software operated on one or more data processors and/or digital signal processors. The elements or components of the embodiments of the present invention may be realized in any appropriate form physically, functionally and logically. In fact, the function may be realized in a single unit, multiple units or as a part of other functional units. In the same way, the present invention may be realized in a single unit, or may be physically or functionally distributed between different units and processors.

Although the present invention has been described in combination with some embodiments, the present invention is not restricted to the specific forms stated herein. On the contrary, although the characteristics may appear to be described in combination with specific embodiments, it will be appreciated by those skilled in the art that various different characteristics of the described embodiments may be combined in accordance with the present invention. In the claims, the phrase "comprise/include" does not exclude the existence of other elements or steps.

Furthermore, in spite of being separately listed, a number of devices, elements, or method steps may be implemented by a single unit or processor, for example. In addition, although individual characteristics may be included in different claims, these characteristics probably may be advantageously combined and included in different claims, which does not mean that the combination of the characteristics is not feasible and/or advantageous. In addition, that the characteristics are included in one type of claims does not mean that the characteristics are limited to this type, but means that the characteristics also may be appropriately applied to other types of claims. In addition, the order of the characteristics in the claims does not mean that the characteristics must act in any particular order.

### Industrial Applicability

The corona discharge component, the ion mobility spectrometer, the computer program and the storage medium provided by the present invention can prolong the service life of the whole corona discharge component relative to a single-pin structure, reduce the discharge voltage of an ion source and improve the discharge stability of the ion source relative to a multi-pin-cluster structure, and can be manufactured in batches more easily as multiple corona pins are fixed on a PCB and the precision and stability of electrode positions can be achieved during installation relative to suspension installation of pin-shaped electrodes.

## Claims

1. A corona discharge component, comprising:
an ionization discharge cavity, which comprises a metal corona cylinder (314) provided with an inlet of a to-be-analyzed gas and a trumpet-shaped front port which facilitates formation of a convergence electric field; and **characterised by**:
multiple corona pins (305) capable of independently controlling the on-off switching of high-voltage, which are insulatively mounted at the center of the metal corona cylinder (314); and
a printed circuit board, PCB, (301) for fixing the corona pins (305).

2. The corona discharge component according to claim 1, wherein the PCB (301) is a high-temperature-resistant PCB with a wiring layer clamped between two insulating layers.

3. The corona discharge component according to claim 1, wherein a certain number of uniformly-distributed vias (303) are formed in the front end of the PCB (301), wherein the assembly position of the central one of the vias (303) is positioned at the axis line of the metal corona cylinder (314), and a corona pin (305) is brazed in each via (303).

4. The corona discharge component according to claim 3, wherein the eccentric distance of each corona pin (305) is 0.4mm.

5. The corona discharge component according to claim 3, wherein each via (303) is connected with a separate lead (302).

6. The corona discharge component according to claim 5, wherein the separate lead (302) is a PCB copper-clad lead, and an independent high-voltage lead (313) is welded at the tail end of the separate lead (302), respectively, so as to connect with an external high-voltage power source.

7. The corona discharge component according to claim 6, wherein the on-off switching of each high-voltage lead (313) can be controlled separately.

8. The corona discharge component according to any one of the claims 1-7, further comprising an ion reaction and storage ring (203) which is shaped as a trumpet-shaped inner passage, wherein a small-opening end of the ion reaction and storage ring (203) is embedded into a trumpet-shaped opening of the metal corona cylinder (314) but is not electrical contact with the metal corona cylinder (314), and a big-opening end of the ion reaction and storage ring (203) contacts a first grid mesh (204) of an ion gate to ensure that an isopotential zone is formed between the inside of the big-opening end and the first grid mesh (204) of the ion gate for ion storage.

9. A method for performing corona discharge by using the corona discharge component according to any one of claims 1-8, wherein at any moment, only one corona pin (305) generates corona discharge, and the other pins are suspended; and the multiple corona pins (305) are alternately loaded with a high voltage for work.

## Patentansprüche

1. Koronaentladungskomponente, umfassend:
eine lonisierungsentladungskavität, die einen Metallkoronazylinder (314) umfasst, der mit einem Einlass eines zu analysierenden Gases und einem trompetenförmigen Frontanschluss, der Bildung eines elektrischen Konvergenzfelds erleichtert, versehen ist; und **gekennzeichnet durch**:
mehrere Koronastifte (305), die zum unabhängigen Steuern des Ein-Aus-Schaltens von Hochspannung in der Lage sind, die isoliert an der Mitte des Metallkoronazylinders (314) montiert sind; und
eine gedruckte Schaltungsplatine, PCB, (301) zum Fixieren der Koronastifte (305).

2. Koronaentladungskomponente nach Anspruch 1, wobei die PCB (301) eine hochtemperaturbeständige PCB mit einer zwischen zwei Isolierschichten eingeklemmten Verdrahtungsschicht ist.

3. Koronaentladungskomponente nach Anspruch 1, wobei eine gewisse Anzahl von gleichmäßig verteilten Kontaktlöchern (303) in dem Frontende der PCB (301) gebildet ist, wobei die Anordnungsposition des zentralen der Kontaktlöcher (303) auf der Achsenlinie des Metallkoronazylinders (314) positioniert ist, und ein Koronastift (305) in jedem Kontaktloch (303) hartverlötet ist.

4. Koronaentladungskomponente nach Anspruch 3, wobei die exzentrische Distanz von jedem Koronastift (305) 0,4 mm beträgt.

5. Koronaentladungskomponente nach Anspruch 3, wobei jedes Kontaktloch (303) mit einer separaten Leitung (302) verbunden ist.

6. Koronaentladungskomponente nach Anspruch 5, wobei die separate Leitung (302) eine kupferkaschierte PCB-Leitung ist, und eine unabhängige Hochspannungsleitung (313) jeweils an dem Endstück der separaten Leitung (302) verschweißt ist, um mit einer externen Hochspannungsleistungsquelle zu verbinden.

7. Koronaentladungskomponente nach Anspruch 6, wobei das Ein-Aus-Schalten von jeder Hochspannungsleitung (313) separat gesteuert werden kann.

8. Koronaentladungskomponente nach einem der Ansprüche 1-7, weiter einen lonenreaktions- und -speicherring (203) umfassend, der als ein trompetenförmiger innerer Durchgang geformt ist, wobei ein sich klein öffnendes Ende des Ionenreaktions- und -speicherrings (203) in eine trompetenförmige Öffnung des Metallkoronazylinders (314) eingebettet ist, aber nicht in elektrischem Kontakt mit dem Metallkoronazylinder (314) steht, und ein sich groß öffnendes Ende des Ionenreaktions- und -speicherrings (203) eine erste Netzmasche (204) eines lonentors kontaktiert, um sicherzustellen, dass eine Äquipotentialzone zwischen der Innenseite des sich groß öffnenden Endes und der ersten Netzmasche (204) des lonentors zur lonenspeicherung gebildet wird.

9. Verfahren zum Durchführen von Koronaentladung durch Verwenden der Koronaentladungskomponente nach einem der Ansprüche 1-8, wobei zu jedem Moment nur ein Koronastift (305) Koronaentladung erzeugt und die anderen Stifte außer Kraft gesetzt sind; und die mehreren Koronastifte (305) abwechselnd mit einer hohen Spannung zum Arbeiten belastet werden.

## Revendications

1. Composant de décharge à effet corona, comprenant :
une cavité de décharge d'ionisation, qui comprend un cylindre métallique à effet corona (314) doté d'une entrée pour un gaz à analyser et un orifice frontal en forme d'entonnoir facilitant la formation d'un champ électrique de convergence ; et **caractérisé par** :
plusieurs broches à effet corona (305) pouvant commander indépendamment la commutation marche-arrêt de haute tension, placées de façon isolante au centre du cylindre métallique à effet corona (314) ; et
une carte de circuit imprimé, PCB, (301) pour fixer les broches à effet corona (305).

2. Composant de décharge à effet corona selon la revendication 1, dans lequel la PCB (301) est une PCB résistante aux températures élevées avec une couche de câblage insérée entre deux couches isolantes.

3. Composant de décharge à effet corona selon la revendication 1, dans lequel un certain nombre de trous d'interconnexion uniformément répartis (303) sont formés dans l'extrémité avant de la PCB (301), dans lequel la position d'assemblage de celui central des trous d'interconnexion (303) est placée sur la ligne axiale du cylindre métallique à effet corona (314), et une broche à effet corona (305) est brasée dans chaque trou d'interconnexion (303).

4. Composant de décharge à effet corona selon la revendication 3, dans lequel la distance excentrique de chaque broche à effet corona (305) est de 0,4 mm.

5. Composant de décharge à effet corona selon la revendication 3, dans lequel chaque trou d'interconnexion (303) est connecté avec un conducteur séparé (302).

6. Composant de décharge à effet corona selon la revendication 5, dans lequel le conducteur séparé (302) est un conducteur de PCB recouvert de cuivre, et un conducteur haute tension indépendant (313) est soudé à l'extrémité arrière du conducteur séparé (302), respectivement, afin de le connecter à une source d'alimentation haute tension externe.

7. Composant de décharge à effet corona selon la revendication 6, dans lequel la commutation marche-arrêt de chaque conducteur haute tension (313) peut être commandée séparément.

8. Composant de décharge à effet corona selon l'une quelconque des revendications 1 à 7, comprenant en outre un anneau de réaction ionique et de stockage (203) sous forme de passage interne en forme d'entonnoir, dans lequel une petite extrémité d'ouverture de l'anneau de réaction ionique et de stockage (203) est enchâssée dans une ouverture en forme d'entonnoir du cylindre métallique à effet corona (314) mais n'est pas en contact électrique avec le cylindre métallique à effet corona (314), et une grande extrémité d'ouverture de l'anneau de réaction ionique et de stockage (203) est en contact avec une première grille (204) d'une porte ionique pour garantir la forme d'une zone isopotentielle entre l'intérieur de la grande extrémité d'ouverture et la première grille (204) de la porte ionique pour le stockage d'ions.

9. Procédé pour réaliser une décharge à effet corona en utilisant le composant de décharge à effet corona selon l'une quelconque des revendications 1 à 8, dans lequel à tout moment, une seule broche à effet corona (305) génère la décharge à effet corona, et les autres broches sont interrompues ; et les multiples broches à effet corona (305) sont alternativement chargées avec une haute tension de travail.
